# EUROPEAN PATENT APPLICATION

(11) **EP 1 773 002 A1**
(43) Date of publication of application: **11.04.2007**
(21) Application number: 06122048.9
(22) Date of filing: 10.10.2006
(51) Int. Cl.: H04L 12/46

(54) **Device, system and method of communicating between a bus controller and one or more remote terminals**

(30) Priority: 10.10.2005 IL 17135105
(71) Applicant: B.V.R. Systems (1998) Ltd, Rosh Ha'Ayin 48091 (IL)
(72) Inventor: Carpasii, Yehoshua, 96190, Jerusalem (IL); Netzer, Vladimir, 74013, Nes Ziona (IL)
(74) Representative: Harrison Goddard Foote

(57) **Abstract**

Embodiments of the present invention provide a method, apparatus and system of communicating between a bus controller and one or more remote terminals. Some demonstrative embodiments of the invention may include, for example, identifying as a first remote terminal to a bus controller controlling a first bus according to a first control protocol; receiving over the first bus a first message intended for the first remote terminal; transmitting a second message corresponding to the first message over the first bus; and based on the first message, selectively transmitting over a second bus, which is controlled according to a second control protocol, a third message to a second remote terminal. Other embodiments are described and claimed.

## Description

### BACKGROUND OF THE INVENTION

A communication Network may be used for communicating between a plurality of devices and/or subsystems.

Communication over the network may comply with a control protocol, e.g., a command/response control protocol as defined by Military Standard 1553 (MIL-STD-1553).

MIL-STD-1553 defines the data communications protocol, data format and the electrical characteristics of the communication network, e.g., for an aircraft.

The communication network, according to the MIL-STD-1553, includes a Bus Controller (BC) and one or more Remote Terminals (RTs), which are able to receive and transmit data over a pair of redundant data buses. The BC is defined as the only component able to control the communication over the buses, e.g., by being defined as the only component able to transmit commands over the bus.

The BC may initiate a data transfer from the BC to an RT ("BC-RT"), from an RT to the BC ("RT-BC"), or between a first RT and a second RT ("RT-RT"). In order to initiate a data transfer, the BC may transmit a command word on the bus addressing an RT. The command word may include a "receive" command word, to command the addressed RT to receive one or more data words; or a "transmit" command word, to command the addressed RT to transmit one or more data words. The addressed RT may transfer a status word in response to the command word. If the command word is a "receive" command word, the BC may transmit one or more data words following the command word. If the command word is a "transmit" command word, the RT may transmit one or more data words after the status word.

The BC may be configured to perform one or more specific predetermined operations relating to one or more RTs, e.g., of one or more predefined types, intended to be connected to the buses.

For example, a communication network in an aircraft may be configured or programmed to operate with one or more predefined RTs, e.g., a radar, a display, a weapon controller, and a missile of a predefined type. The communication network may also include a BC configured to control the communication between the predefined RTs.

It may be desired to connect to the communication network another device and/or subsystem different than the predefined RTs, and/or not recognized by the BC. For example, it may be desired to connect a missile of a type different than the predefined missile type. This may require modifying the configuration of the BC to accommodate the other device and/or subsystem. Such modification of the BC may be relatively expensive, and/or may require the updating of the BC, e.g., by the manufacturer of the BC.

### SUMMARY OF SOME EMBODIMENTS OF THE INVENTION

Embodiments of the present invention provide a method, apparatus and system of communicating between a bus controller and one or more remote terminals. Some demonstrative embodiments of the invention may include, for example, identifying as a first remote terminal to a bus controller controlling a first bus according to a first control protocol; receiving over the first bus a first message intended for the first remote terminal; transmitting a second message corresponding to the first message over the first bus; and based on the first message, selectively transmitting over a second bus, which is controlled according to a second control protocol, a third message to a second remote terminal. The first message may be addressed to a first remote terminal recognized by the bus controller, and/or the third message may be addressed to a second remote terminal not recognized by the bus controller.

In some demonstrative embodiments of the invention the second message may be transmitted before transmitting the third message, and in other demonstrative embodiments of the invention the second message may be transmitted after transmitting the third message.

In some demonstrative embodiments of the invention, at least part of the first message may be converted into at least part of the third message, for example, by calculating data of the third message based on data of the first message, data received over the first bus, data received over the second bus, and/or data received over one or more auxiliary communication channels.

In some demonstrative embodiments of the invention the second message may include a remote-terminal status word, e.g., if the first message relates to transferring data from the bus controller to the first remote terminal.

Some demonstrative embodiments of the invention may include receiving from the second remote terminal at least one data word in response to the third message, the third message may include a transmit command to the second remote terminal, and the second message may include a message corresponding to the data word, e.g., if the first message relates to transmitting data from the first remote terminal to the bus-controller.

In some demonstrative embodiments of the invention the third message may include a transmit command to the second remote terminal, e.g., if the first message relates to transmitting data from the first remote terminal to a third remote terminal connected to the first bus.

Some demonstrative embodiments of the invention may include receiving a data word from the third remote terminal; and the third message may include a message corresponding to the data word, e.g., if the first message relates to transmitting data from the third remote terminal to the first remote terminal.

In some demonstrative embodiments of the invention, the third message may include at least one transmit command.

In some demonstrative embodiments of the invention the first message may include a bus-control-to-remote-terminal message, a remote-terminal-to-bus-controller message, a mode command message, or a remote-terminal-to-remote-terminal message.

In some demonstrative embodiments of the invention at least one of the first and second control protocols may include a control protocol complying with the MIL-1553 standard, the ARINC standard, or the DIGIBUS standard.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

Fig. 1 is a schematic illustration of a communication system including an interface apparatus in accordance with some demonstrative embodiments of the present invention;

Figs. 2-4 are schematic illustrations of three communication system configurations in accordance with three demonstrative embodiments of the invention, respectively;

Fig. 5 is a schematic illustration of an interface apparatus in accordance with some demonstrative embodiments of the invention;

Fig. 6 is a schematic flow chart illustration of a method of communicating between a Bus Controller (BC) and one or more Remote Terminals (RTs) in accordance with some demonstrative embodiments of the invention;

Fig. 7 is a schematic flow chart illustration of a method of performing one or more operations relating to a BC-RT message in accordance with some demonstrative embodiments of the invention;

Fig. 8 is a sequence of schematic timing diagrams corresponding to various stages in the method of Fig. 7;

Fig. 9 is a schematic flow chart illustration of a method of performing one or more operations relating to a RT-BC message in accordance with some demonstrative embodiments of the invention;

Fig. 10 is a sequence of schematic timing diagrams corresponding to various stages in the method of Fig. 9;

Fig. 11 is a schematic flow chart illustration of a method of performing one or more operations relating to a RT-RT message in accordance with some demonstrative embodiments of the invention; and

Figs. 12A-12C are sequences of schematic timing diagrams corresponding to various stages in the method of Fig. 11;

It will be appreciated that for simplicity and clarity of illustration, elements shown in the drawings have not necessarily been drawn accurately or to scale. For example, the dimensions of some of the elements may be exaggerated relative to other elements for clarity or several physical components included in one functional block or element. Further, where considered appropriate, reference numerals may be repeated among the drawings to indicate corresponding or analogous elements. Moreover, some of the blocks depicted in the drawings may be combined into a single function.

### DETAILED DESCRIPTION OF THE INVENTION

In the following detailed description, numerous specific details are set forth in order to provide a thorough understanding of the invention. However, it will be understood by those of ordinary skill in the art that the present invention may be practiced without these specific details. In other instances, well-known methods, procedures, components and circuits may not have been described in detail so as not to obscure the present invention.

Some portions of the following detailed are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the following discussions, it is appreciated that throughout the specification discussions utilizing terms such as "processing," "computing," "calculating," "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the present invention may include apparatuses for performing the operations herein. These apparatuses may be specially constructed for the desired purposes, or they may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), electrically programmable read-only memories (EPROMs), electrically erasable and programmable read only memories (EEPROMs), magnetic or optical cards, a Dynamic RAM (DRAM), a Synchronous DRAM (SD-RAM), a Flash memory, a volatile memory, a non-volatile memory, a cache memory, a buffer, a short term memory unit, a long term memory unit, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

It should be understood that the present invention may be used in a variety of applications. Although the present invention is not limited in this respect, the methods, devices and/or systems disclosed herein may be used in many applications, e.g., military applications, civil applications or any other suitable application. For example, the methods, devices and/or systems disclosed herein may be implemented as units of an aircraft, e.g., a transport aircraft, a fighter aircraft, a refueler aircraft, a bomber, a helicopter or any other suitable airborne vehicle; a satellite; a space shuttle; a space station; a missile; a ship; a submarine; a tank; and/or in any other unit and/or device.

Although the present invention is not limited in this respect, the circuits and techniques disclosed herein may be used in many apparatuses such as units of a wired communication system or network, e.g., a Local Area Network (LAN) communication system; a wireless communication system, e.g., a Wireless LAN (VVLAN) communication system; an optical-fiber communication system; and/or in any other unit and/or device.

Types of communication systems intended to be within the scope of the present invention include, although are not limited to, communication systems controlled according to a control protocol, for example, a control protocol based on Time Division Multiplexing (TDM), e.g., such that in a given moment only one component of the communication system is allowed to transmit over a bus of the communication system. For example, the control protocol may include a command/response protocol, e.g., a command/response protocol in compliance with Military Standard 1553, and more particularly Military Standard 1553 revision B, entitled "Aircraft Internal Time Division Command/Response Multiplex Data Bus, published September 21, 1978 (hereinafter: "the 1553 standard"); Defense standard 00-18, entitled "Avionic Data Transmission Interface Systems-Part 2: Guide to the Simplex and Half Duplex Serial Digital Transmission Interface Systems Standard", issued by the Ministry of Defense of the United Kingdom; Military Standard 1773; or any other suitable control protocol.

Some demonstrative embodiments of the invention may enable, for example, connecting at least one Remote Terminal (RT) ("the added RT") to a standard and/or existing communication system, for example, a communication system including a Bus controller (BC) and one or more RTs communicating over a first data bus according to a first control protocol, for example, a standard control protocol, e.g., a command/response protocol complying with the 1553 standard. In some demonstrative embodiments, the added RT may not be able to directly communicate with the BC over the data bus, for example, if the added RT is not recognized by the BC; the added RT is not able to communicate in accordance the first control protocol; and/or the added RT is not able to communicate with the BC, and/or the one or more RTs, e.g. if the added RT has features which are not supported and/or recognized by the BC and/or one or more of the RTs.

According to some demonstrative embodiments, an interface apparatus may be implemented to enable communication of one or more RTs, e.g., the added RT, over the first data bus, such that the added RT may communicate over the first bus, e.g., with the BC, via the interface apparatus, as described in detail below.

In some demonstrative embodiments of the invention, the interface may be connected to the first bus, and recognized by the BC as a RT. For example, the interface may identify to the BC as an RT known to or recognized by the BC. The interface apparatus may control one or more RTs, e.g., not recognized by the BC, over a second bus, which may also not be recognized by the BC. The interface apparatus may receive over the bus messages intended for the RT recognized by the BC, and control the one or more RTs connected to the second bus using one or more messages, e.g., based on eh message received from the BC, as described below.

Some demonstrative embodiments of the invention may be applied, for example, to an existing communication network, e.g., of an aircraft. The communication network may include a BC and a predetermined set of RTs. The BC may control the communication over the network according to a predetermined control protocol, and each one of the RTs may be able to execute a predetermined set of operations and/ or commands. For example, an RT may be associated with a bomb of a first predetermined type, and may execute the command of releasing the bomb. Accordingly, the BC may be programmed to provide the RT associated with the bomb with a release command, e.g., when the pilot of the aircraft presses a release button. It may be desired, for example, to connect to the aircraft an added bomb of a second type, e.g., a bomb designed to operate based on data received from the network. The data may include, for example, coordinates of a target and/or coordinates of the location at which the bomb is being released. Such data may be determined, for example, by another RT of the network, e.g., a Global Positioning System (GPS); or by an external device or subsystem. However, such data may not be provided to the added bomb, since the BC may not be configured to transfer the data from the GPS to the added bomb. In some demonstrative embodiments of the invention, the interface apparatus may be connected to the existing network, and may identify to the BC as an RT recognized by the BC, e.g., as the bomb recognized by the BC. The interface may be configured to request the data from the GPS, and transfer the data to the added bomb, e.g., upon receiving a release command from the BC of the existing network. Thus, the interface apparatus may be able to control an added RT, e.g., the added bomb, based on commands corresponding to an RT recognized by the BC, e.g., the bomb of the first type, which may be received from the BC over the existing network.

The term "message" as used herein may refer to a combination of one or more words, e.g., data words, command words, and/or status words, and/or any other block, packet, and/or sequence, which may be transmitted by an element, e.g., a BC or an RT, over a data bus in accordance with a control protocol. For example, a BC to RT ("BC-RT") message, which may be transmitted by a BC, may include a sequence of a "receive" command word addressed to a RT intended to receive the message, followed by one or more data words. In response to a BC-RT message, the RT may transmit a message including a status word. In another example, a RT to BC ("RT-BC") message, which may be transmitted by the BC, may include a "transmit" command word addressed to an RT intended to transmit data to the BC. In response to the RT-BC message, the RT may transmit a message including a sequence of a status word followed by one or more data words. In a further example, a remote terminal-to-remote terminal ("RT-RT") message, which may be transmitted by the BC, may include a sequence of a "receive" command word addressed to a first RT intended to receive data, followed by a "transmit" command word addressed to a second RT intended to transmit the data. In response to the RT-RT message the second RT may transmit a message including a status word followed by one or more data words. The first RT may transmit a message including a status word, e.g., after receiving the one or more data words.

Part of the discussion herein may relate, for exemplary purposes, to transmitting and/or receiving a message. However, embodiments of the invention are not limited in this regard, and may include, for example, transmitting a signal, a block, a data portion, a data sequence, a frame, a data signal, a preamble, a signal field, a content, an item, a packet, or the like.

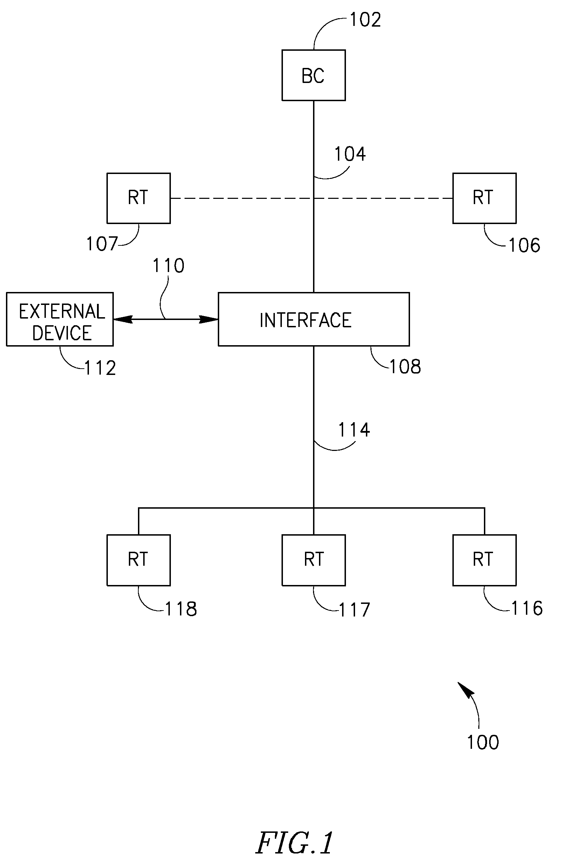

Reference is made to Fig. 1, which schematically illustrates a communication system 100 in accordance with demonstrative embodiments of the present invention.

According to some demonstrative embodiments of the invention, communication system 100 may include a BC 102 able to control communication over a first bus set 104 according to a first control protocol, e.g., a command/response control protocol complying with the 1553 standard. For example, BC 102 may be able to issue onto bus set 104 commands relating to the transfer of data over bus set 104, and/or the control and management of bus set 104, e.g., in accordance with the 1553 standard.

According to some demonstrative embodiments of the invention, BC 102 may be implemented as part of a mission computer, a display processor, a fire control computer, and/or any other suitable BC hardware and/or software, e.g., as are known in the art. For example, BC 102 may include a word controller, a message controller, and/or a frame controller BC architecture, e.g., as are defined by the 1553 standard.

According to some demonstrative embodiments of the invention, system 100 may also include an interface apparatus 108 (also referred to herein as "BC+") able to communicate with BC 102 over bus set 104 (also referred to herein as "BC bus"), e.g., according to the first control protocol. Interface 108 may also be able to communicate with one or more RTs, e.g., RT 116, RT 117, and/or RT 118, over a second bus set 114 (also referred to herein as "BC+ bus"), for example, according to a second control protocol, e.g., as described in detail below.

According to some demonstrative embodiments of the invention, interface apparatus 108 may be connected to bus set 104 and identify to BC 102 as a RT. For example, interface apparatus 108 may identify itself over bus set 104 as a RT recognized by BC 102, e.g., a bomb type recognized by BC 102.

According to some demonstrative embodiments of the invention, the first and second control protocols may be substantially identical. For example, the first and second control protocols may each include a command/response protocol, e.g., in compliance with the 1553 standard.

In other demonstrative embodiments of the invention the first and second control protocols may be substantially different. For example, the first protocol may include a command/response protocol in compliance with the 1553 standard, while the second control protocol may include any desired control protocol or scheme, e.g., in compliance with any other desired standard.

According to some demonstrative embodiments of the invention, bus set 104 may include one or more buses, e.g., two buses, to enable communication between BC 102 and interface 108, and/or one or more RTs connected to bus set 104, e.g., RT 106 and/or RT 107. For example, bus set 104 may include one or more LAN, WLAN and/or any other suitable buses, e.g., as are known in the art. In some embodiments, bus set 104 may include one or more data buses, e.g., each including a twisted shielded pair transmission line as are described by the 1553 standard.

According to some demonstrative embodiments of the invention, bus set 114 may include one or more buses, e.g., two buses, to enable communication between interface 108 and one or more RTs connected to bus set 114, e.g., RTs 116, 117, and/or 118. For example, bus set 114 may include one or more LAN, WLAN and/or any other suitable buses, e.g., as are known in the art.

According to some demonstrative embodiments of the invention, RTs 106, 107, 116, 117, and/or 118, may include any suitable RT hardware and/or software. For example, RTs 106, 107 may be capable of transferring data between bus set 104 and a device, system and/or subsystem intended to communicate over bus set 104. RTs 116, 117, and/or 118 may be capable of transferring data between bus set 114 and a device, system and/or subsystem intended to communicate over bus set 114. In some embodiments of the invention one or more of RTs 106, 107, 116, 117, and 118 may be embedded within the system, device and/or subsystem intended to communicate over bus set 104, or bus set 114. The device, system, and/or subsystem intended to communicate over bus sets 104 or 114 may include, for example, an avionics device or system, a sensor, a display, a processor, a controller, a computing platform, a missile, a radar, and/or any other system, device and/or subsystem, e.g., as known in the art.

According to some demonstrative embodiments of the invention, one or more of RTs 106, 107, 116, 117, and/or 118, may include a transceiver, or a receiver and/or a transmitter; an encoder and/or a decoder; a protocol controller; a buffer and/or a memory; and/or a subsystem interface, e.g., as are all known in the art.

RTs 106, 107 may be connected to bus set 104, and/or RTs 116, 117 118 may be connected to bus set 114 using any suitable connection, e.g., a direct coupler or a transformer coupler, as are known in the art.

According to some demonstrative embodiments of the invention, interface 108 may be able to receive a first message over bus set 104 according to the first control protocol. The first message may be addresses, for example, to a RT recognized by BC 102, e.g., the RT used by interface 108 for identification over bus set 104. Interface 108 may also be able to transmit over bus set 104 a second message corresponding to the first message, and to selectively transmit over bus set 114 a third message based on the first message, e.g., as described below.

In some demonstrative embodiments of the invention, interface 108 may receive the first message before transmitting the second message, and/or to transmit the second message before transmitting the third message. In other embodiments of the invention interface 108 may receive the first message, and transmit the second and third messages in any other suitable order, e.g., as described in detail below.

According to some demonstrative embodiments of the invention, interface may be able to transmit the third message during a time period at least partially overlapping a time period during which interface 108 receives the first message, e.g., as described below.

According to some demonstrative embodiments of the invention, interface 108 may also be able to communicate over an auxiliary channel 110 with one or more external devices 112, e.g., not connected to bus sets 104 and 114, as described below.

According to some demonstrative embodiments of the invention, interface 108 may be able to selectively associate one or more of RTs 116, 117, and 118 with either one of bus sets 104 and 114, for example, based on a mode of operation of interface 108, and/or a command or data received from external device 112, e.g., as described in detail below.

In some demonstrative embodiments of the invention, interface 108 may be recognized by BC 102 as a RT connected to bus set 104. Accordingly, interface 108 may be able to receive over bus set 104 messages intended for interface 108 as a RT of a predetermined type recognized by BC 102; to reply to such messages; and/or to selectively generate one or more messages to be transferred to RTS 116, 117 and/or 118 over bus set 114, e.g., as described below. In these embodiments of the invention, BC 102 may not identify and/or recognize one or more of RTs 116, 117, and/or 118.

In other demonstrative embodiments of the invention, interface 108 may recognize and/or identify one or more of RTs 116, 117 and 118 as RTs connected to bus set 104, while interface 108 may be "transparent" to BC 102. For example, interface 108 may be able to receive over bus set 104 messages intended for one or more of RTs 116, 117 and 118; to reply to such messages on behalf of RTs 116, 117 and/or 118; and/or to selectively generate one or more messages to be transferred to RTS 116, 117 and/or 118 over bus set 114, e.g., as described below.

Embodiments of the invention described above with reference to Fig. 1 may be implemented by different communication system configurations, for example, in accordance with specific system requirements, e.g., as described below.

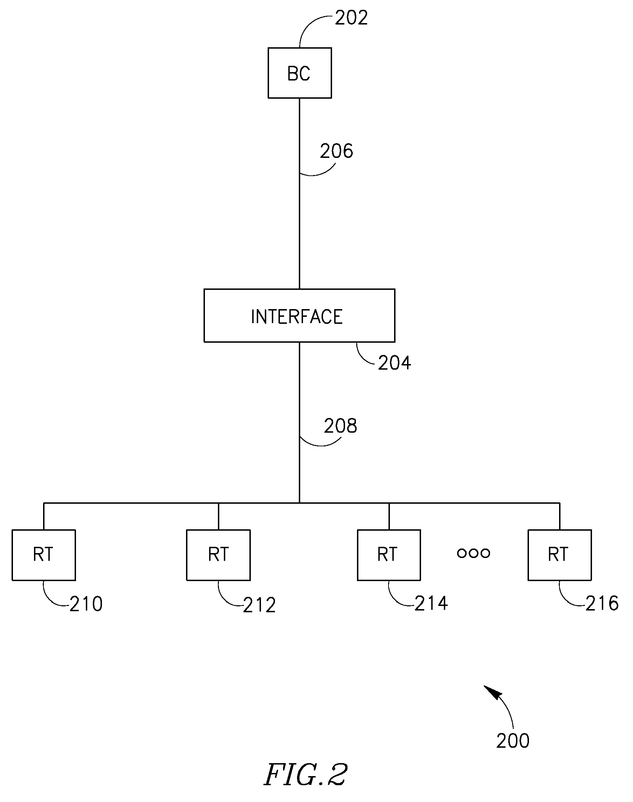

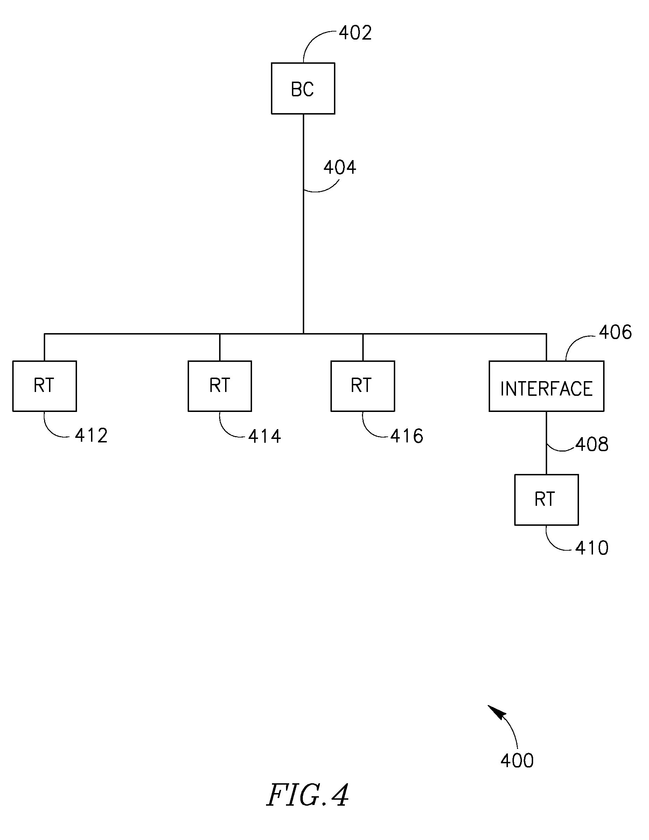

Reference is made to Figs. 2-4, which schematically illustrate a first communication system configuration 200, a second communication system configuration 300, and a third communication system configuration 400, according to three respective demonstrative embodiments of the invention.

Configuration 200 may include a BC 202 able to communicate with an interface apparatus 204 over a first bus 206 according to a first control protocol. Interface 204 may communicate with one or more RTs, e.g., RTs 210, 212, 214, and/or 216, over a second bus 208 according to a second control protocol. Although the invention is not limited in this respect, interface 202 may perform the functionality of interface 108 (Fig. 1). Configuration 200 may enable, for example, to control the communication between BC 202 and each one of the RTs. In some embodiments interface 204 may identify to BC 202 as a single RT connected to bus 206. In other embodiments interface 204 may be "transparent" to BC 202, which may recognize RTs 210, 212, 214, and 216, as RTs connected to bus 206.

Configuration 300 may include a BC 302 able to communicate with an interface apparatus 306 and one or more RTs, e.g., RTs 314 and/or 316, over a first bus 304 according to a first control protocol. Interface 306 may communicate with one or more RTs, e.g., RTs 310 and/or 312, over a second bus 308 according to a second control protocol. Although the invention is not limited in this respect, interface 306 may perform the functionality of interface 108 (Fig. 1). In some embodiments interface 306 may identify to BC 302 as an RT connected to bus 304 in addition to RTs 314 and 316, e.g., while RTs 310 and/or 312 may not be recognized by BC 302. In other embodiments interface 306 may be "transparent" to BC 302, which may recognize all RTs 310, 312, 314, and 316 as RTs connected to bus 304. Configuration 300 may enable, for example, adding RTs 310 and/or 312 to an existing communication system including BC 302, bus 304, and RTs 314 and 316. Configuration 300 may also enable, for example, interface 306, RT 310, and/or RT 312 to communicate over bus 308, e.g., without interfering with the communication over bus 304. For example, interface 306 may receive, over bus 308, data from RT 310, and/or RT 312; and transfer, over bus 304, a message corresponding to the received data.

Configuration 400 may include a BC 402 able to communicate with an interface apparatus 406, and one or more RTs, e.g., RTs 412, 414, and/or 416, over a first bus 404 according to a first control protocol. Interface 406 may communicate with an RT 410, over a second bus 408 according to a second control protocol. Although the invention is not limited in this respect, interface 406 may perform the functionality of interface 108 (Fig. 1). In some embodiments interface 406 may identify to BC 402 as an RT connected to bus 404 in addition to RTs 412, 414, and 416, while RT 410 may not be recognized by BC 402. In other embodiments interface 406 may be "transparent" to BC 402, which may recognize all RTs 410, 412, 414, and 416 as RTs connected to bus 404. Configuration 400 may enable, for example, adding RT 410 to an existing communication system including BC 402, bus 404, and RTs 412, 414 and 416.

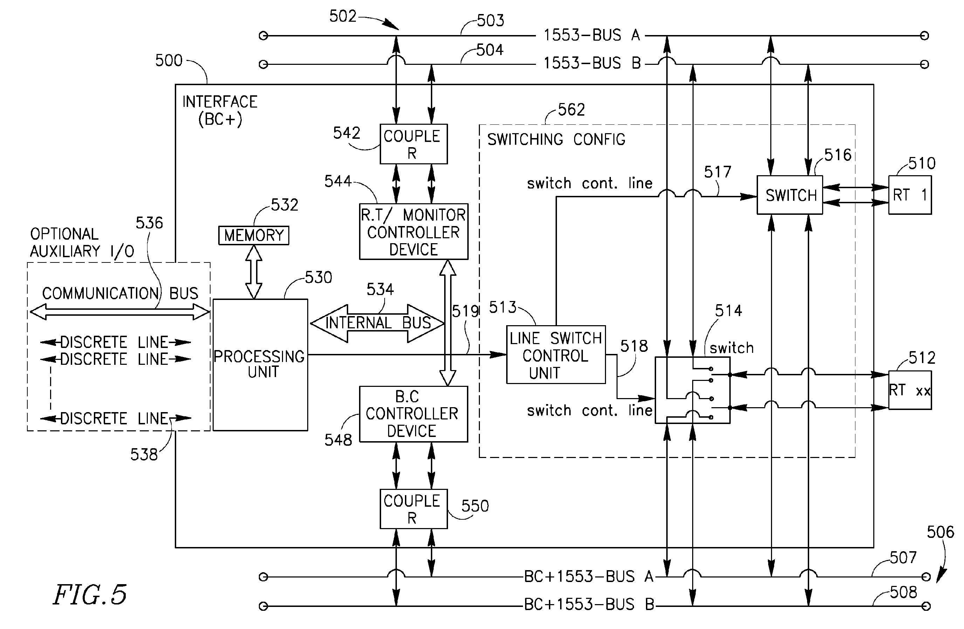

Reference is made to Fig. 5, which schematically illustrates an interface apparatus 500 in accordance with some demonstrative embodiments of the invention. Although the invention is not limited in this respect, interface 500 may perform the functionality of interface 108 (Fig. 1).

According to some demonstrative embodiments of the invention, interface 500 may communicate with a BC (not shown in Fig. 5) according to a first control protocol over a first bus set 502, e.g., including a first bus 503 and a second bus 504. For example, buses 503 and 504 may be identical to each other, e.g., to enable redundancy such that communication is performed over only one of buses 503 and 504 at a given time, e.g., as is known in the art.

According to some demonstrative embodiments of the invention, interface 500 may communicate with one or more RTs, e.g., RTs 510 and/or 512, over bus set 502 and/or over a second bus set 506, e.g., including a first bus 507 and a second bus 508, as described below. For example, buses 507 and 508 may be identical to each other, e.g., to enable redundancy, e.g., as is known in the art.

According to some demonstrative embodiments of the invention, interface 500 may communicate over bus set 502 according to the first control protocol, and over bus set 506 according to the second control protocol.

According to some demonstrative embodiments of the invention, interface 500 may also include a switching configuration 562 to selectively associate one or more of RTs 510 and 512 with either one of bus sets 502 and 506, e.g., as described below. Switching configuration 562 may include, for example, a switch controller 513, and one or more switches, e.g., switches 514 and 516, connected to the one or more RTs intended to communicate with interface 500, e.g., RTs 510 and 512. For example, switch 516 may be connected to RT 510, and may selectively associate RT 510 with either one of bus sets 502 and 506, based on a control signal received from controller 513 via a control line 517. Switch 514 may be connected, for example, to RT 512, and may selectively associate RT 512 with either one of bus sets 502 and 506, based on a control signal received from controller 513 via a control line 518. Switch controller 513 may control switches 514 and/or 516, for example, based on control information 519, e.g., as described in detail below.

Some demonstrative embodiments of the invention, e.g., as described above, may relate to an interface apparatus, e.g., interface 500, including a switching configuration, e.g., switching configuration 562. However, it will be appreciated by those skilled in the art that in other embodiments of the invention, the interface apparatus and switching configuration may be implemented as separate units, e.g., such that the switching configuration is an external unit able to receive control information from the interface apparatus, and to selectively associate one or more RTs with either one of two bus sets.

According to some demonstrative embodiments of the invention, interface 500 may also include a controller 530 able to communicate over a bus 534 with a RT/monitor controller 544, and a BC controller 548, as described below.

According to some demonstrative embodiments of the invention, RT/monitor controller 544 may be able to perform the functionality of a RT and/or a monitor connected to bus set 502, e.g., as is known in the art. For example, RT/monitor controller 544 may receive messages transmitted over bus set 502 according to the first protocol; and provide controller 530, e.g., over bus 534, with corresponding messages in a format suitable for controller 530. RT/monitor controller 544 may also receive over bus 534, e.g., from controller 530, messages intended to be communicated over bus set 502; and transmit over bus set 502 messages in a format complying with the first control protocol. For example, RT/monitor controller 544 may include a DDC BU-6474XX controller, manufactured by Data Device Corporation of Bohemia NY, USA (hereinafter "DDC"), or any other suitable hardware and/or software, e.g., as is known in the art.

According to some demonstrative embodiments of the invention, BC controller 548 may be able to perform the functionality of a BC, for example, to control the communication over bus set 506, e.g., according to the second control protocol. BC controller 548 may receive over bus 534, e.g., from controller 530, messages intended to be communicated over bus set 506; and transmit over bus set 506 messages in a format complying with the second control protocol. BC controller 548 may also receive messages transmitted over bus set 506 according to the second control protocol; and provide controller 530, e.g., over bus 534, with corresponding messages in a format suitable for controller 530. For example, BC controller 548 may include a BU-6474X/6484X/6486X controller manufactured by DDC, or any other suitable hardware and/or software.

According to some demonstrative embodiments of the invention, interface 500 may also include a coupler 542 to couple RT/monitor controller 544 to bus set 502, e.g., in accordance with the control protocol implemented by bus set 502; and/or a coupler 550 to couple BC controller 548 to bus set 506, e.g., in accordance with the control protocol implemented by bus set 506. For example, coupler 542 and/or coupler 550 may include a direct coupler, or a transformer coupler, e.g., as are known in the art.

According to some demonstrative embodiments of the invention, controller 530 may include or may be a Central Processing Unit (CPU), a Digital Signal Processor (DSP), a microprocessor, a host processor, a plurality of processors, a controller, a chip, a microchip, or any other suitable multi-purpose or specific processor or controller.

According to some demonstrative embodiments of the invention, controller 530 may receive a first message over a bus of bus set 502, e.g., via coupler 542, RT/monitor controller 544 and bus 534; transmit a second message corresponding to the first message over a bus of bus set 502, e.g., via coupler 542, RT/monitor controller 544 and bus 534; and selectively transmit a third message based on the first message over a bus of bus set 506, e.g., via bus 534, BC controller 548, and coupler 550, as described in detail below.

According to some demonstrative embodiments of the invention, interface 500 may also include one or more auxiliary communication channels, e.g., a communication bus 536, and/or one or more discrete communication lines 538, to connect controller 530 with one or more external devices, e.g., one or more external devices 112 (Fig. 1).

According to some demonstrative embodiments of the invention, controller 530 may receive data and/or information to be used for selectively converting the first message into the third message, e.g., over communication bus 536 and/or communication lines 538. Additionally or alternatively, controller 530 may receive, e.g., over communication bus 536 and/or communication lines 538, data and/or information to be stored by interface 500. Additionally or alternatively, the one or more external devices may include any subsystem able to provide controller 530 with an external data. Controller 530 may generate a message to be communicated over bus set 502 and/or 506, e.g., based on the integration of data received from one or more of the sources mentioned above.

According to some demonstrative embodiments of the invention, interface 500 may also include a memory 532 associated with controller 530. Memory 532 may be able to store, for example, information and/or data relating to one or more messages intended to be converted by controller 530, one or more RTs connected to bus set 506, and/or any other suitable information or data. The data stored by memory 532 may include, fro example, navigation data, performance data, radar data, and/or any other type of data. The data stored by memory 532 may be received, for example, from bus 520, bus 506, communication bus 536, and/or communication lines 538. For example, memory 532 may store one or more Look-Up-Tables (LUTs) corresponding to one or more BC-RT messages, RT-BC messages and/or RT-RT messages, e.g., as described below. The LUTs may include, for example, data relating to the one or more RTs connected to bus set 506, e.g., a type and/or address of the RTs.

Memory 532 may include or may be, for example, a RAM, a ROM, a DRAM, a SD-RAM, a Flash memory, a volatile memory, a non-volatile memory, a cache memory, a buffer, a short term memory unit, a long term memory unit, or any other suitable memory unit or storage unit.

According to some demonstrative embodiments of the invention, switch configuration 562 may selectively associate one or more RTs, e.g., RTs 510 and/or 512, with either one of bus sets 502 and 506, e.g., based on control signal 519. For example, switching configuration may be able to associate one or more RTs, e.g., all the RTs, with bus set 502, e.g., by default. Switching configuration 562 may be able to associate one or more RTs, e.g., all the RTs, with bus set 502, for example, when interface 530 is in an "off" mode of operation, e.g., when substantially no power is supplied to interface 500. This may enable ensuring that one or more of the RTs, e.g., all the RTs, are connected directly to bus set 502, while ignoring interface 500.

According to some demonstrative embodiments of the invention, controller 530 may generate control signal 519 to selectively associate one or more RTs, e.g., RT 510 and/or 512, with either one of bus sets 502 and 506. Controller 530 may generate signal 519, for example, based on the contents of a message received by controller 530, e.g., over bus set 502 and/or bus set 506, based on data or a command received via bus 536, lines 538; or based on a method or algorithm implemented by controller 530.

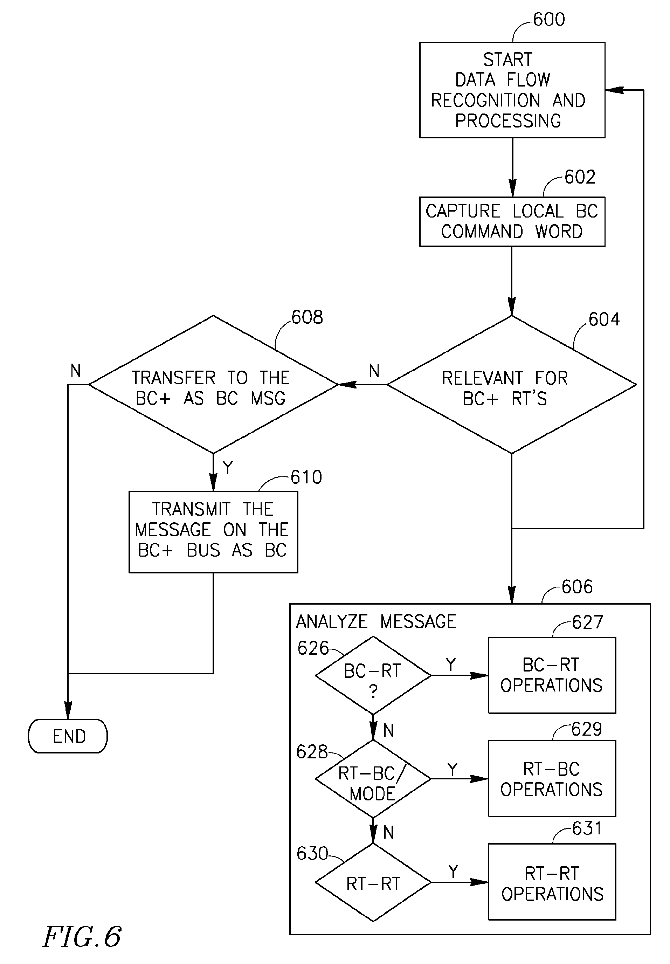

Reference is now made to Fig. 6, which schematically illustrates a method of communicating between a BC and one or more RTs according to some demonstrative embodiments of the invention. Although the invention is not limited in this respect, the one or more operations of the method of Fig. 6 may be performed by interface 108 (Fig. 1).

As indicated at block 600, the method may include monitoring communications over a first bus controlled by a BC according to a first control protocol. Monitoring the communications over the first bus may be performed, for example, by RT/monitor controller 544 as described above with reference to Fig. 5.

As indicted at block 602, the method may include capturing a first message, e.g., a command word, transferred over the first bus, for example, by the BC. Capturing the first message may be performed, for example, by RT/monitor controller 544 as described above with reference to Fig. 5.

As indicated at block 604, the method may also include determining whether the first message is intended for one or more RTs connected to a second bus controlled according to a second control protocol. For example, controller 530 (Fig. 5) may determine whether the first message is intended for one or more RTs connected to the second bus, based on the type of the first message, e.g., BC-RT, RT-RT or RT-BC; based on an address field in the message, e.g., identifying an RT intended to receive the message; and/or based on any other suitable criteria.

As indicated at block 608, the method may include determining whether to block the transmission of the first message over the second bus, e.g., if it is determined that the first message is not intended for any of the RTs connected to the second bus. The determining whether to block the transmission of the first message may be performed, for example, by controller 530 (Fig. 5), based on predetermined criteria and/or data stored in memory 532 (Fig. 5) identifying messages to be blocked. For example, controller 530 (Fig. 5) may determine whether to block the first message based on the type of the first message, e.g., BC-RT, RT-RT or RT-BC; based on an address field in the message, e.g., identifying an RT intended to receive the message; and/or based on any other suitable criteria.

As indicated at block 610, the method may also include transmitting the first message over the second bus, e.g., if it is determined that transmission of the first message is not to be blocked. Transmitting the first message over the second bus may be performed, for example, by controller 530 as described above with reference to Fig. 5.

As indicated at block 606, if it is determined that the first message is intended for a RT connected to the second bus, then the method may include analyzing the first message, e.g., as described below.

According to some demonstrative embodiments of the invention, the first control protocol may include a command/response protocol, e.g., a control scheme complying with the 1553 standard. The first message may include, for example, a BC-RT message, a RT-BC message, or a RT-RT message.

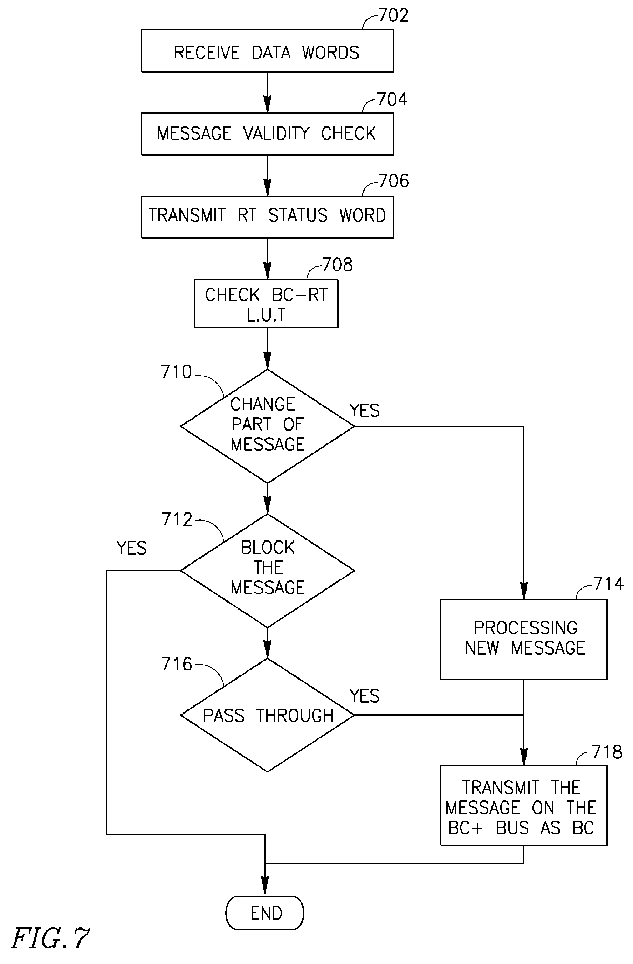

As indicated at block 626, the method may include determining whether the first message is a BC-RT message intended for a RT connected to the second bus. As indicated at block 627, the method may include performing one or more operations relating to the BC-RT message, e.g., as described below with reference to Fig. 7.

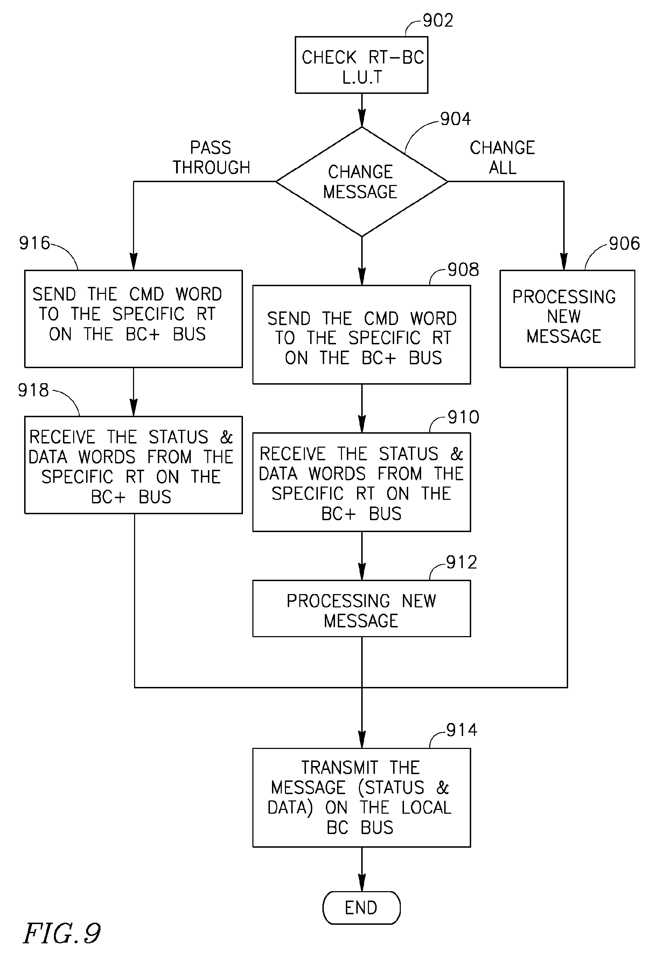

As indicated at block 628, the method may include determining whether the first message is a RT-BC message or a mode command intended for the RT connected to the second bus. As indicated at block 629, the method may include performing one or more operations relating to the RT-BC message or mode command, e.g., as described below with reference to Fig. 9.

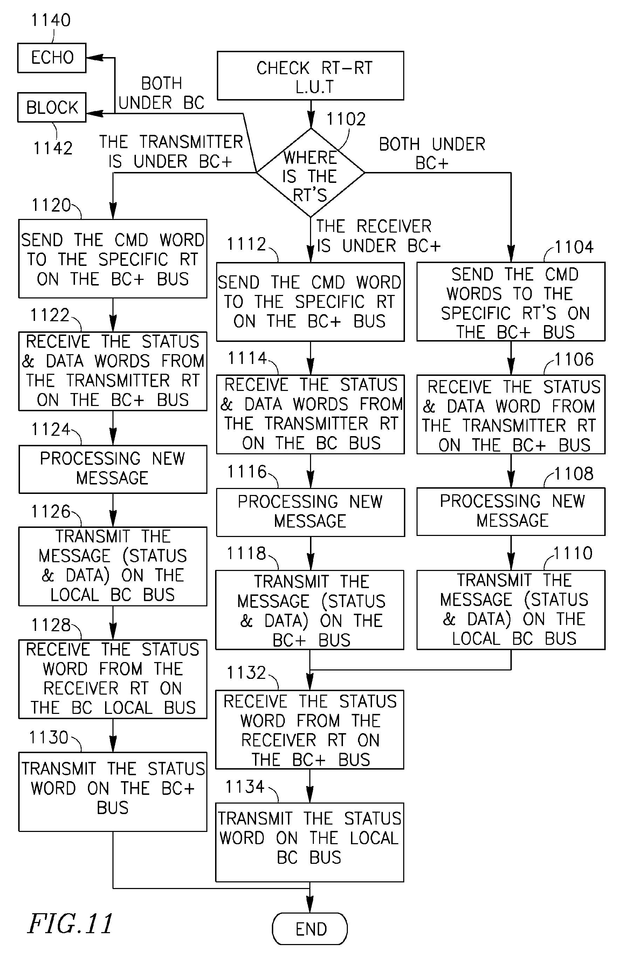

As indicated at block 630, the method may include determining whether the first message is a RT-RT message intended for the RT connected to the second bus. As indicated at block 631, the method may include performing one or more operations relating to the RT-RT message, e.g., as described below with reference to Fig. 11.

According to embodiments of the invention, any combination of the actions described above with reference to Fig. 6 may be implemented for communicating between a BC and one or more RTs. Further, other actions or series of actions may be used.

Reference is made to Fig. 7, which schematically illustrates a method of performing one or more operations relating to a BC-RT message received over a first bus and intended for an RT connected to a second bus, according to some demonstrative embodiments of the invention.

Although the invention is not limited in this respect, one or more operations of the method of Fig. 7 may be implemented by interface 118 (Fig. 1), e.g., for communicating between BC 102 (Fig. 2) and an RT ("the addressed RT"), e.g., RT 118 (Fig. 1), connected to bus 114 (Fig. 1). For example, one or more operations of the method of Fig. 7 may be implemented if it is determined, e.g., by controller 530 (Fig. 1), that a message received over bus set 502 (Fig. 5) is a BC-RT message intended for RT 118 (Fig. 1), e.g., as described above with reference to block 606 (Fig. 6).

As indicated at block 702, the method may include receiving from the BC, over the first bus, one or more data words of the BC-RT message.

As indicated at block 704, the method may include performing a validity check to the data words, for example, using any suitable validity checking method, e.g., as defined by the 1553 standard.

As indicated at block 706, the method may include transmitting over the first bus a second message, e.g., a RT status word. The RT status word may include for example an RT status word indicating the addressed RT is ready to received data from the BC, e.g., in accordance with the 1553 standard.

As indicated at block 708, the method may include determining whether the data of the BC-RT message is to be processed, at least partially, to generate other data to be provided to the addressed RT. As indicated at block 708, in some demonstrative embodiments controller 530 (Fig. 5) may compare the received BC-RT message to one or more predetermined message types, which may be stored for example, in memory 532 (Fig. 5), e.g., in the form of a BC-RT LUT.

As indicated at block 714, the method may include processing the data of the received BC-RT message, e.g., if it is determined that the data of the BC-RT message is to be processed. The processing may include, for example, converting at least part of the data of the BC-RT message into data to be transmitted over the second bus; and/or performing one or more calculations based on the data of the BC-RT message, data of one or more previous messages, and/or data received from the one or more auxiliary communication channels. The processing may be performed, for example, by controller 530 (Fig. 5). For example, controller 530 (Fig. 5) may determine the data to be transmitted over the second bus, by performing one or more calculations based on the data of the BC-RT message, data of one or more previous messages, and/or data received from the one or more auxiliary communication channels.

As indicated at block 712, the method may include determining whether transmission of the data of the BC-RT message over the second bus is to be blocked. As indicated at block 716, the method may include identifying the data of the BC-RT message as data to be transmitted over the second bus, e.g., if it is determined that the transmission of the data of the BC-RT message is to be allowed.

As indicated at block 718, the method may include selectively transmitting over the second bus a third message. For example, controller 530 (Fig. 5) may transmit the third message over the second bus in accordance with the second control protocol. The third message may include, for example, a receive command relating to the addressed RT followed by one or more data words. The one or more data words may correspond to the processed data, e.g., if at least part of the data of the BC-RT message was processed; or the data of the BC-RT message, e.g., if it is determined that the BC-RT message is not to be blocked.

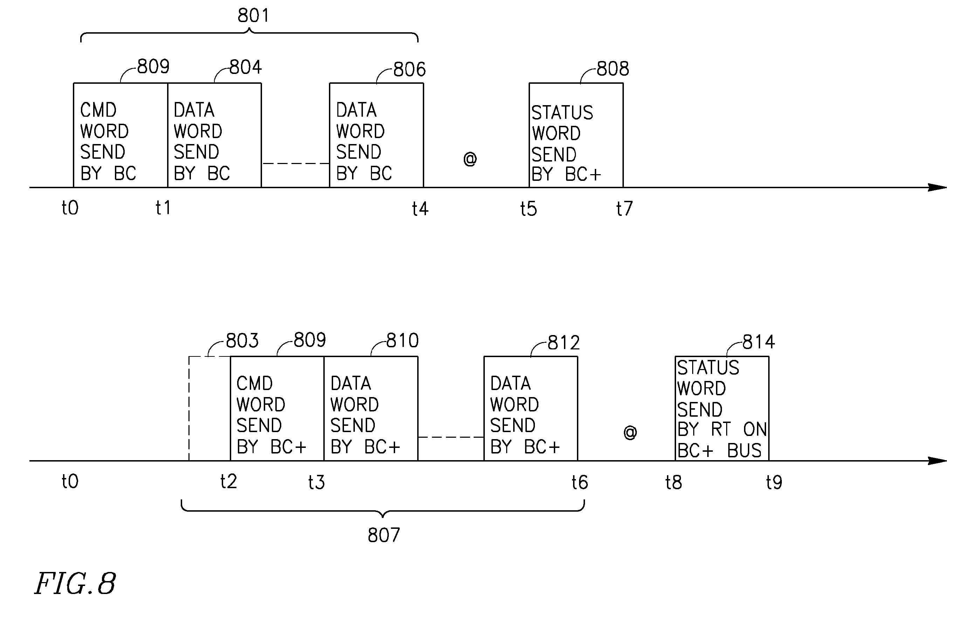

Reference is also made to Fig. 8, which illustrates a sequence of schematic timing diagrams corresponding to various stages in the method of Fig. 7.

According to some demonstrative embodiments of the invention, the BC-RT message may be transmitted by the BC over the first bus during a time period 801. The BC-RT message may include a "receive" command word intended for the addressed RT, which may be transmitted over the first bus during a time period 802; and a sequence of one or more data words transmitted over the first bus, e.g., during time periods 804 and 806.

According to some demonstrative embodiments of the invention, the BC-RT message may be processed during a time period 803. The processing may include, for example, performing the validity check of the message, determining the type of the message, determining whether the BC-RT is intended for an RT connected to the second bus, and/or processing the data of the message, e.g., as described above with reference to Fig. 7.

According to some demonstrative embodiments of the invention, time period 803 may be relatively short, e.g., shorter than an allowed delay time period as defined by the 1553 standard.

According to some demonstrative embodiments of the invention the second message, e.g., the RT status word, may be transmitted over the first bus during a time period 808, e.g., after receiving the entire BC-RT message.

According to some demonstrative embodiments of the invention, the third message may be transmitted over the second bus during a time period 807. For example, the "receive" command word of the third message may be transmitted during a time period 809, e.g., substantially immediately after time period 803; and the one or more data words of the third message may be transmitted during time periods 810 and 812. In some embodiments of the invention the third message may include one or more data words different than the data words of the BC-RT message, e.g., as described above. In some embodiments, one or more words of the third message may be identical to one or more words of the first message.

According to some demonstrative embodiments of the invention, a RT status word may be received, over the second bus, from the addressed RT, e.g., during a time period 814.

In some demonstrative embodiments of the invention, e.g., as shown in Fig. 8, the third message may be transmitted over the second bus during time period 807, which at least partially overlaps time period 801, during which the first message is being received over the first bus. For example, one or more data words of the first message may be processed "on the fly", e.g., by controller 530 (Fig. 5), to generate one or more data words of the third message.

Reference is made to Fig. 9, which schematically illustrates a method of performing one or more operations relating to a RT-BC message received over a first bus and intended for an RT connected to a second bus, according to some demonstrative embodiments of the invention.

Although the invention is not limited in this respect, one or more operations of the method of Fig. 9 may be implemented by interface 118 (Fig. 1), e.g., for communicating between BC 102 (Fig. 2) and an RT ("the addressed RT"), e.g., RT 118 (Fig. 1), connected to bus 114 (Fig. 1). For example, one or more operations of the method of Fig. 9 may be implemented if it is determined, e.g., by controller 530 (Fig. 1), that a message received over bus set 502 (Fig. 5) is a RT-BC message, e.g., as described above with reference to block 606 (Fig. 6).

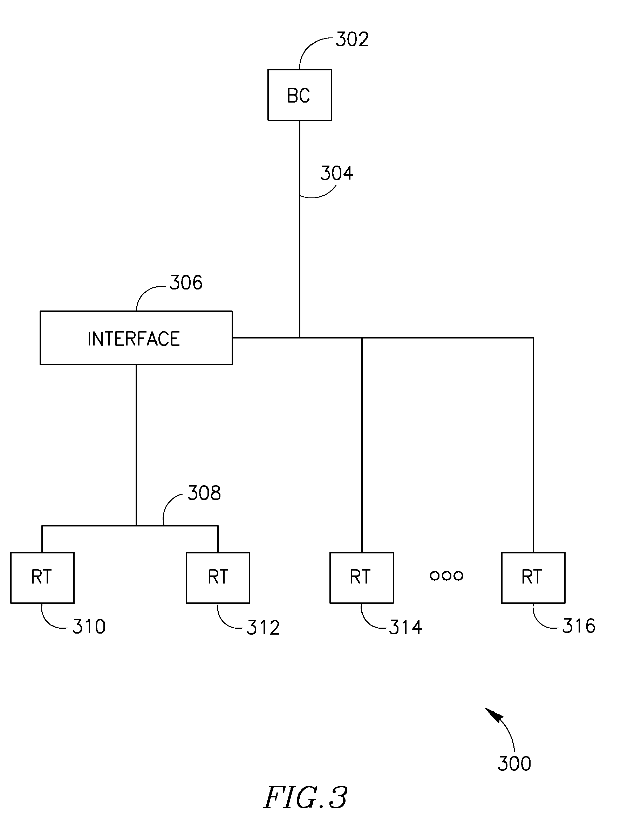

In some demonstrative embodiments of the invention, a second message may be transmitted over the first bus, e.g., including data intended to be transmitted to the BC in response to the RT-BC message ("the returned data"). The returned data may include data received from the addressed RT ("the RT data"); other data, e.g., data stored in memory 532 (Fig. 5), and/or data of previous communication over the first and/second buses; and/or a combination of the RT data and the other data. Controller 530 (Fig. 3) may be able, for example, to selectively generate the second message including one or more data words corresponding to the returned data, e.g., based on the type of the addressed RT, the availability of the other data, and/or any other criteria, as described below.

As indicated at block 904, the method may include determining whether the returned data is intended to include the RT data, the other data, and/or a combination thereof. As indicated at block 902, in some demonstrative embodiments controller 530 (Fig. 5) may compare the received RT-BC message to one or more predetermined RT-BC messages, which may be stored for example, in memory 532 (Fig. 5), e.g., in the form of a RT-BC LUT. The predetermined RT-BC messages may relate, for example, to one or more predetermined RT addresses, and/or to one or more predetermined types of data.

As indicated at block 906, the method may include generating the returned data, for example, by processing the data of the RT-BC message, e.g., if it is determined that there is no need to receive data from the addressed RT in order to generate the returned data.

If it is determined that the returned data is to be based, at least in part, on the RT data, then the method may include transmitting over the second bus a third message, e.g., including a "transmit" command word, to the addressed RT, as indicated at block 908; receiving a message from the addressed RT ("the RT message") including a RT status word and one or more data words, as indicated at block 910; and generating the returned data, for example, by processing and/or converting the data words received from the addressed RT, as indicated at block 912.

If it is determined that the returned data is to include data words substantially as received from the addressed RT, then the method may include sending the third message including the "transmit" command word to the addressed RT over the second bus, as indicated at block 916; and receiving the RT message from the addressed RT, as indicated at block 910.

As indicated at block 914, the method may include transmitting over the first bus the second message including an RT status word, e.g., corresponding to the addressed RT; followed by one or more data words corresponding to the returned data. Thus, for example, the one or more data words of the second message may include, for example, one or more of the data words received from the addressed RT, one or more data words based on the RT data, one or more data words corresponding to the other data, and/or any combination thereof.

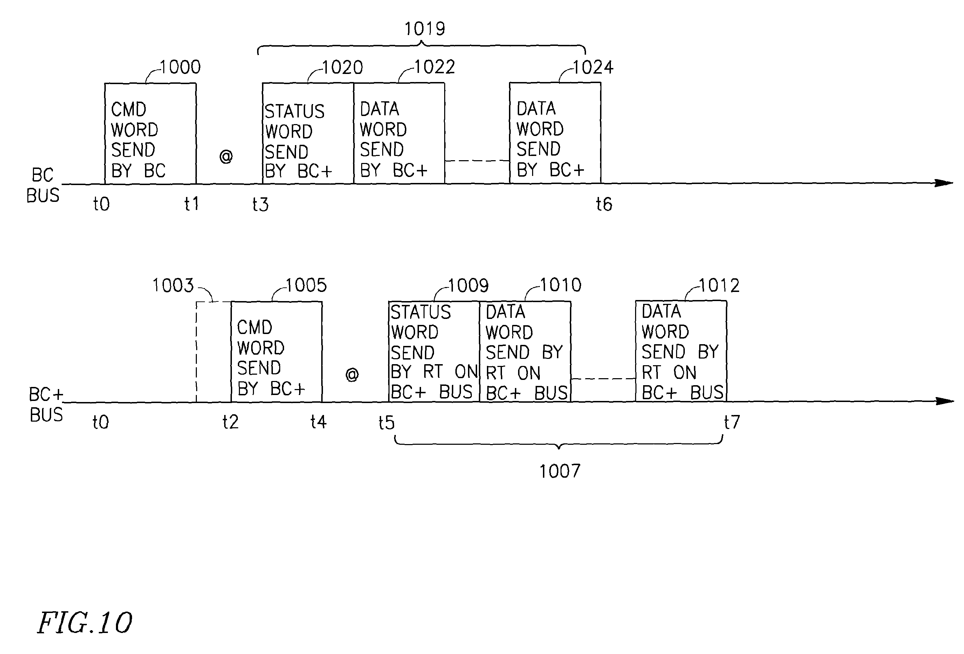

Reference is also made to Fig. 10, which illustrates a sequence of schematic timing diagrams corresponding to various stages in the method of Fig. 9.

According to some demonstrative embodiments of the invention, the RT-BC message may be transmitted by the BC over the first bus during a time period 1000, and may include a "transmit" command word intended for the addressed RT.

According to some demonstrative embodiments of the invention, the RT-BC message may be processed during a time period 1003. The processing may include, for example, determining the type of the message, determining whether the RT-BC message is intended for an RT connected to the second bus, and/or determining whether or not the returned data is to based, at least in part, on the RT data, e.g., as described above with reference to Fig. 9. According to some demonstrative embodiments of the invention, time period 1003 may be relatively short, e.g., shorter than an allowed delay time period as defined by the 1553 standard.

According to some demonstrative embodiments of the invention the third message including the "transmit" command word may be transmitted over the second bus during a time period 1005, e.g., substantially immediately after time period 1003.

According to some demonstrative embodiments of the invention, the RT message may be received over the second bus during a time period 1007. For example, the status word of the RT message may be received during a time period 1009; and the one or more data words of the RT message may be received during time periods 1010 and 1012.

According to some demonstrative embodiments of the invention, the second message may be transmitted, over the first bus, e.g., during a time period 1019. For example, the RT status word corresponding to the addressed RT may be transmitted over the first bus during a time period 1020; and the one or more words corresponding to the returned data may be transmitted during time periods 1022 and 1024.

In some demonstrative embodiments of the invention, e.g., as shown in Fig. 10, the second message may be transmitted over the first bus during time period 1019, which at least partially overlaps time period 1007, during which the RT message is being received over the second bus. For example, one or more data words of the RT message may be processed "on the fly", e.g., by controller 530 (Fig. 5), to generate one or more data words of the second message. In some demonstrative embodiments time 1019 may during or after time period 1007, e.g., if it is determined that the returned data is to be based, at least in part, on the RT data, as described above with reference to block 908 (Fig. 9). In some embodiments of the invention time period 1019 may substantially overlap time period 1007, e.g., if it is determined that the returned data is to include data words substantially as received from the addressed RT, as described above with reference to block 916 (Fig. 9). For example, time period 1020 may occur substantially immediately after time period 1009, and time period 1022 may occur substantially immediately after time period 1010 and so on.

Although the method described above relates to performing one or more operations relating to a RT-BC message, it will be appreciated by those skilled in the art that the method of Figs 9 and 10 may be analogously implemented for performing one or more operations related to a Mode command, e.g., as defined by the 1553 standard.

Reference is made to Fig. 11, which schematically illustrates a method of performing one or more operations relating to a RT-RT message received over a first bus and intended for at least one RT connected to a second bus, according to some demonstrative embodiments of the invention.

Although the invention is not limited in this respect, one or more operations of the method of Fig. 11 may be implemented by interface 118 (Fig. 1), e.g., for communicating between BC 102 (Fig. 2), and first and second RT, at least one of which is connected to bus 114 (Fig. 1). For example, one or more operations of the method of Fig. 11 may be implemented if it is determined, e.g., by controller 530 (Fig. 1), that a message received over bus set 502 (Fig. 5) is a RT-RT message, e.g., as described above with reference to block 606 (Fig. 6).

In some demonstrative embodiments of the invention, the RT-RT message may relate to transmitting data from the first RT to the second RT. As indicated at block 1102, the method may include determining whether the first RT is connected to the first bus and the second RT is connected to the second bus; the first RT is connected to the second bus and the second RT is connected to the first bus; both the first and second RTs are connected to the second bus; or both the first and second RTs are connected to the first bus.

If it is determined that both the first and second RTs are connected to the first bus, then the method may include repeating ("echoing") the RT-RR message over the second bus, as indicated at block 1140; or blocking transmission of the RT-RT message over the second bus, as indicated at block 1142.

If it is determined that both the first and second RTs are connected to the second bus, then the method may include, for example, transmitting a RT-RT message over the second bus, as indicated at block 1104. For example, controller 530 (Fig. 5) may transmit over bus set 506 (Fig. 5) a "receive" command word addressed to the second RT, followed by a "transmit" command word addressed to the first RT.

The method may also include receiving from the first RT a message including an RT status word and one or more data words, as indicated at block 1106.

As indicated at block 1108, the method may also include generating a second message to be transmitted over the first bus, e.g., in response to the RT-RT message which was received over the first bus. In some demonstrative embodiments of the invention, generating the second message may include converting at least part of the data received from the first RT. In other embodiments of the invention, the second message may include the data received from the first RT. The method may also include transmitting over the first bus the second message, as indicated at block 1110.

As indicated at block 1132, the method may also include receiving, over the second bus, a status word from the second RT. As indicated at block 1134, the method may further include transmitting, over the first bus, a status word indicating the second RT has received the data from the first RT.

If it is determined that the first RT is connected to the second bus and the second RT is connected to the first bus, then the method may include, for example, transmitting a "transmit" command word over the second bus, as indicated at block 1120. For example, controller 530 (Fig. 5) may transmit over bus set 506 (Fig. 5) the "transmit" command word addressed to the first RT.

The method may also include receiving from the first RT a message including an RT status word and one or more data words, as indicated at block 1122. As indicated at block 1124, the method may also include generating a second message to be transmitted over the first bus, e.g., in response to the RT-RT message. In some demonstrative embodiments of the invention, generating the second message may include converting at least part of the data received from the first RT. In other embodiments of the invention, the second message may include the data received from the first RT. As indicated at block 1126, the method may also include transmitting the second message over the first bus.

As indicated at block 1128, the method may also include receiving a status word from the second RT over the first bus, e.g., indicating the second RT has received the data sent over the first bus.

As indicated at block 1130, the method may further include transmitting, over the second bus, a status word indicating the second RT has received the data.

If it is determined that the first RT is connected to the first bus and the second RT is connected to the second bus, then the method may include, for example, transmitting a "receive" command word to the second RT over the second bus, as indicated at block 1112. As indicated at block 1114, the method may also include receiving from the first RT a message including an RT status word and one or more data words.

As indicated at block 1116, the method may include generating a message to be transmitted to the second RT over the second bus. In some demonstrative embodiments of the invention, generating the message to be transmitted to the second RT may include converting at least part of the data received from the first RT. In other embodiments of the invention, the message to be transmitted to the second RT may include the data received from the first RT. As indicated at block 1118, the method may also include transmitting the message to the second RT over the second bus.

The method may also include receiving the status word form the second RT, as indicated at block 1132; and transmitting over the first bus the status word indicating the second RT has received the data, as indicated at block 1134.

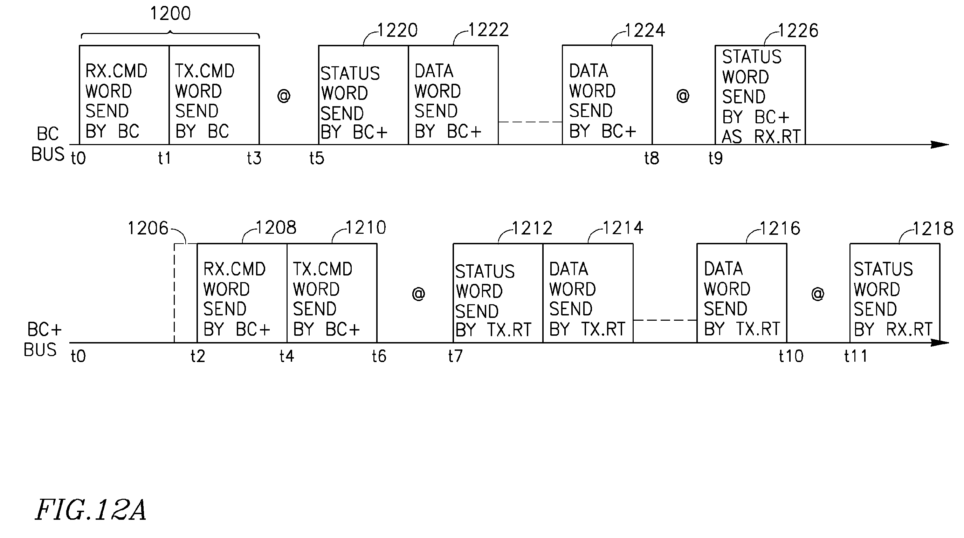

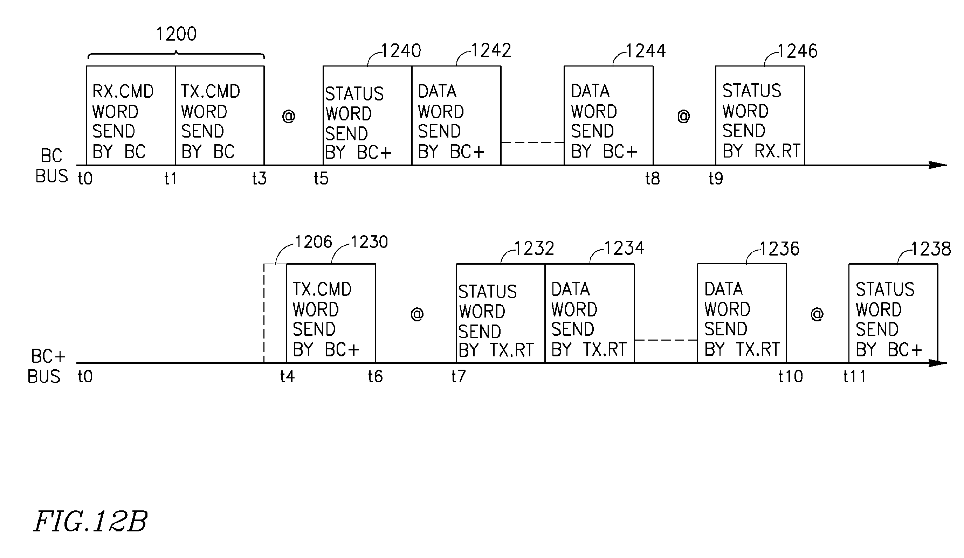

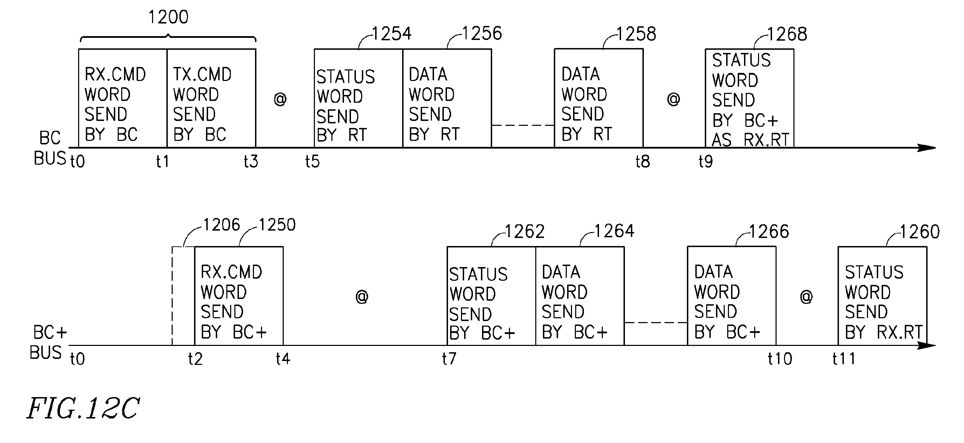

Reference is also made to Figs. 12A, 12B and 12C, which illustrate sequences of schematic timing diagrams corresponding to various stages in the method of Fig. 11.

According to some demonstrative embodiments of the invention, the RT-RT message may be transmitted by the BC over the first bus during a time period 1200, and may include a "transmit" command word intended for the first RT, and a "receive" command word intended for the second RT.

According to some demonstrative embodiments of the invention, the RT-RT message may be processed during a time period 1206. The processing may include, for example, determining the type of the message, determining whether the RT-RT message is intended for at least one RT connected to the second bus, e.g., as described above with reference to Fig. 11. According to some demonstrative embodiments of the invention, time period 1206 may be relatively short, e.g., shorter than an allowed delay time period as defined by the 1553 standard.

As shown in Fig. 12A, if the first and second RTs are both connected to the second bus, then a "receive" command word may be transmitted to the second RT over the second bus, during a time period 1208; a "transmit" command word may be transmitted to the first RT over the second bus, during a time period 1210; the status word from the first RT may be received during a time period 1212, followed by the one or more data words, which may be received from the first RT during time periods 1214 and 1216; and the status word from the second RT may be received over the second bus during a time period 1218. The second message transmitted over the first bus may include a status word transmitted during a time period 1220, followed by one or more data words transmitted during time periods 1222 and 1224. The status word indicating the second RT has received the data may be transmitted over the first bus during a time period 1226. In other embodiments of invention, timing of transmitting messages over the first and second buses may be different than timing of Fig. 12A. For example, time period 1220 may occur after time period 1212, e.g., if one or more of the data words to be transmitted over the first bus are based on one or more data words to be received over the second bus.

As shown in Fig. 12B, if the first RT is connected to the second bus and the second RT is connected to the first bus, then the "transmit" command word may be transmitted to the first RT during a time period 1230; the status word from the first RT may be received during a time period 1232, followed by the one or more data words, which may be received from the first RT during time periods 1234 and 1236. The second message transmitted over the first bus may include a status word transmitted during a time period 1240, followed by one or more data words transmitted during time periods 1242 and 1244. The status word indicating the second RT has received the data may be transmitted over the first bus during a time period 1246. The status word indicating the second RT has received the data may be transmitted to the first RT over the second bus during a time period 1238.

As shown in Fig. 12C, if the second RT is connected to the second bus and the first RT is connected to the first bus, then the "receive" command word may be transmitted to the second RT during a time period 1250. The status word may be received from the first RT over the first bus during a time period 1262, and the data words may be received from the first RT during time periods 1264 and 1266. The message transmitted to the second BC may include a status word transmitted over the second bus during a time period 1254, followed by one or more data words transmitted over the second bus during time periods 1256 and 1258. The status word indicating the second RT has received the data may be transmitted over the first bus during a time period 1268, e.g., before the status word is received from the second RT over the second bus, e.g., during time period 1260.

Embodiments of the present invention may be implemented by software, by hardware, or by any combination of software and/or hardware as may be suitable for specific applications or in accordance with specific design requirements. Embodiments of the present invention may include units and subunits, which may be separate of each other or combined together, in whole or in part, and may be implemented using specific, multi-purpose or general processors, or devices as are known in the art. Some embodiments of the present invention may include buffers, registers, storage units and/or memory units, for temporary or long-term storage of data and/or in order to facilitate the operation of a specific embodiment.

While certain features of the invention have been illustrated and described herein, many modifications, substitutions, changes, and equivalents may occur to those of ordinary skill in the art. It is, therefore, to be understood that the appended claims are intended to cover all such modifications and changes as fall within the scope of the invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A method comprising:
identifying as a first remote terminal to a bus controller controlling a first bus according to a first control protocol;
receiving over said first bus a first message intended for said first remote terminal;
transmitting a second message corresponding to said first message over said first bus; and
based on said first message, selectively transmitting over a second bus, which is controlled according to a second control protocol, a third message to a second remote terminal.

2. The method of claim 1, wherein said first and second remote terminals comprise remote terminals of the same type.

3. The method of claim 2, wherein said second remote terminal is able to perform one or more operations different than said first terminal.

4. The method of any one of claims 1-3, wherein said second remote terminal is not recognized by said bus controller.

5. The method of any one of claims 1-4, wherein said second bus is not recognized by said bus controller.

6. The method of any one of claims 1-5, wherein transmitting said second message comprises transmitting said second message after transmitting said third message.

7. The method of any one of claims 1-5, wherein transmitting said third message comprises transmitting said third message after transmitting said second message.

8. The method of any one of claims 1-7, wherein selectively transmitting said third message comprises transmitting said third message if said first message corresponds to a message of a set of one or more predefined messages.

9. The method of any one of claims 1-8, wherein selectively transmitting said third message comprises converting at least part of said first message into at least part of said third message.

10. The method of claim 9, wherein said converting comprises calculating data of said third message based on data selected from the group consisting of data of said first message, data received over said first bus, data received over said second bus, and data received over one or more auxiliary communication channels.

11. The method of any one of claims 1-10, wherein transmitting said second message comprises transmitting a remote-terminal status word over said first bus, if said first message relates to transferring data from said bus controller to said first remote terminal.

12. The method of any one of claims 1-10, comprising receiving from said second remote terminal at least one data word in response to said third message, wherein transmitting said third message comprises transmitting a transmit command to said second remote terminal, and wherein transmitting said second message comprises transmitting to said bus controller a message corresponding to said data word.

13. The method of any one of claims 1-10, wherein transmitting said third message comprises transmitting a transmit command to said second remote terminal, if said first message relates to transmitting data from said first terminal to a third remote terminal connected to said first bus.

14. The method of claim 13 comprising:
receiving a data word from said second terminal in response to said transmit command; and
transmitting a fourth message corresponding to said data word over said first bus.

15. The method of claim 14 comprising:
receiving a status word from said third remote terminal in response to said third message; and
transmitting said status word over said second bus.

16. The method of any one of claims 1-10 comprising receiving a data word from a third remote terminal connected to said first bus, if said first message relates to transmitting data from said third remote terminal to said first remote terminal, wherein transmitting said third message comprises transmitting a message corresponding to said data word.

17. The method of claim 16 comprising:
receiving a status word from said second remote terminal in response to said third message; and
transmitting said status word over said first bus.

18. The method of any one of claims 1-10, wherein transmitting said third message comprises transmitting at least one transmit command over said second bus.

19. The method of claim 18 comprising:
receiving a data word from said second remote terminal in response to said transmit command;
transmitting a message corresponding to said data word over said first bus;
receiving a status word from a third remote terminal connected to said second bus; and
transmitting said status word over said first bus.

20. The method of any one of claims 1-19, wherein transmitting said second message in response to said first message comprises transmitting said second message in response to a message selected from the group consisting of a bus-control-to-remote-terminal message, a remote-terminal-to-bus-controller message, a mode command message, and a remote-terminal-to-remote-terminal message.

21. The method of any one of claims 1-20, wherein at least one of said first and second control protocols comprises a control protocol complying with a standard selected from the group consisting of the MIL-1553 standard, the ARINC, standard, and the DIGIBUS standard.

22. The method of any one of claims 1-21, wherein said first and second control protocols are substantially identical.

23. The method of any one of claims 1-22 comprising selectively blocking the transmission of said first message to said second remote terminal.

24. The method of any one of claims 1-23 comprising selectively associating said second remote terminal with either one of said first and second busses, based on a predetermined scheme.

25. An interface apparatus comprising:
a controller to identify as a first remote terminal to a bus controller controlling a first bus according to a first control protocol; receive over said first bus a first message intended for said first remote terminal; transmit a second message corresponding to said first message over said first bus; and based on said first message, selectively transmit over a second bus, which is controlled according to a second control protocol, a third message to a second remote terminal.

26. The interface apparatus of claim 25, wherein said first and second remote terminals comprise remote terminals of the same type.

27. The interface apparatus of claim 26, wherein said second remote terminal is able to perform one or more operations different than said first terminal.

28. The interface apparatus of any one of claims 25-27, wherein said second remote terminal is not recognized by said bus controller.

29. The interface apparatus of any one of claims 25-28, wherein said second bus is not recognized by said bus controller.

30. The interface apparatus of any one of claims 25-29, wherein said controller is able to transmit said second message after transmitting said third message.

31. The interface apparatus of any one of claims 25-29, wherein said controller is able to transmit said third message after transmitting said second message.

32. The interface apparatus of any one of claims 25-31, wherein said controller is able to transmit said third message, if said first message corresponds to a message of a set of one or more predefined messages.

33. The interface apparatus of any one of claims 25-32, wherein said controller is able to generate said third message by converting at least part of said first message into at least part of said third message.

34. The interface apparatus of claim 33, wherein said controller is able to calculate data of said third message based on data selected from the group consisting of data of said first message, data received over said first bus, data received over said second bus, and data received over one or more auxiliary communication channels.

35. The interface apparatus of any one of claims 25-34, wherein said controller is able to transmit said second message including a remote-terminal status word, if said first message relates to transferring data from said bus controller to said first remote terminal.

36. The interface apparatus of any one of claims 25-34, wherein said controller is able to transmit said third message including a transmit command to said second remote terminal, receive from said second remote terminal at least one data word in response to said third message, and transmit said second message including a message corresponding to said data word.

37. The interface apparatus of any one of claims 25-34, wherein said controller is able to transmit said third message including a transmit command to said second remote terminal, if said first message relates to transmitting data from said first remote terminal to a third remote terminal connected to said first bus.

38. The interface apparatus of claim 37, wherein said controller is able to receive a data word from said second remote terminal in response to said transmit command, and transmit a fourth message corresponding to said data word over said first bus.

39. The interface apparatus of claim 38, wherein said controller is able to receive a status word from said third remote terminal in response to said fourth message, and transmit said status word over said second bus.

40. The interface apparatus of any one of claims 25-34, wherein said controller is able to receive a data word from a third remote terminal connected to said first bus, and to transmit said third message including a message corresponding to said data word, if said first message relates to transmitting data from said third remote terminal to said first remote terminal.

41. The interface apparatus of claim 40, wherein said controller is able to receive a status word from said second remote terminal in response to said third message, and transmit said status word over said first bus.

42. The interface apparatus of any one of claims 25-34, wherein said controller is able to transmit said third message including at least one transmit command.

43. The interface apparatus of claim 42, wherein said controller is able to receive a data word from said second remote terminal in response to said transmit command, transmit a message corresponding to said data word over said first bus, receive a status word from a third remote terminal connected to said second bus, and transmit said status word over said first bus.

44. The interface apparatus of any one of claims 25-43, wherein said first message comprises a message selected from the group consisting of a bus-control-to-remote-terminal message, a remote-terminal-to-bus-controller message, a mode command message, and a remote-terminal-to-remote-terminal message.

45. The interface apparatus of any one of claims 25-44, wherein at least one of said first and second control protocols comprises a control protocol complying with a standard selected from the group consisting of the MIL-1553 standard, the ARINC, standard, and the DIGIBUS standard.

46. The interface apparatus of any one of claims 25-45, wherein said first and second control protocols are substantially identical.

47. The interface apparatus of any one of claims 25-46, wherein said controller is able to selectively block the transmission of said first message to a remote terminal connected to said second bus.

48. The interface apparatus of any one of claims 25-47 comprising a switching configuration able to selectively associate said second remote terminal with either one of said first and second buses, based on a predetermined scheme.
